# EUROPÄISCHE PATENTSCHRIFT

(11) **EP 3 102 412 B1**
(45) Veröffentlichungstag und Bekanntmachung des Hinweises auf die Patenterteilung: **06.06.2018**
(21) Anmeldenummer: 15700440.9
(22) Anmeldetag: 09.01.2015
(51) Int. Cl.: B32B 37/18, B32B 15/08

(54) **VERFAHREN ZUM HERSTELLEN EINES SCHICHTVERBUNDS ZUR ABSCHIRMUNG VON ELEKTROMAGNETISCHER STRAHLUNG UND SCHICHTVERBUND ZUR ABSCHIRMUNG VON ELEKTROMAGNETISCHER STRAHLUNG**
METHOD FOR PRODUCING A LAMINATE FOR SHIELDING ELECTROMAGNETIC RADIATION AND LAMINATE FOR SHIELDING ELECTROMAGNETIC RADIATION
PROCÉDÉ DE FABRICATION D'UN COMPOSITE STRATIFIÉ SERVANT AU BLINDAGE CONTRE LE RAYONNEMENT ÉLECTROMAGNÉTIQUE ET COMPOSITE STRATIFIÉ SERVANT AU BLINDAGE CONTRE LE RAYONNEMENT ÉLECTROMAGNÉTIQUE

(30) Priorität: 07.02.2014 DE 102014202245
(43) Veröffentlichungstag der Anmeldung: 14.12.2016
(73) Patentinhaber: Robert Bosch GmbH, 70442 Stuttgart (DE)
(72) Erfinder: VOGEL, Veronika, 70327 Stuttgart (DE); ACKERMANN, Jens, 70437 Stuttgart (DE)
(86) Internationale Anmeldenummer: PCT/EP2015/050301
(87) Internationale Veröffentlichungsnummer: WO 2015/117790

(56) Entgegenhaltungen:
- EP-A1- 1 880 888
- DE-A1-102005 048 122
- DE-A1-102011 056 807
- US-A1- 2011 059 293

## Beschreibung

Die Erfindung betrifft ein Verfahren zum Herstellen eines Schichtverbunds zur Abschirmung von elektromagnetischer Strahlung und einen Schichtverbund zur Abschirmung von elektromagnetischer Strahlung.

### Stand der Technik

Kunststoffe ohne leitfähige Zusatzstoffe sind in der Regel elektrisch isolierend. Diese Eigenschaft ermöglicht den Einsatz von Kunststoffen in weiten Teilen der Elektrotechnik. Kunststoffe als Dielektrika weisen die Eigenschaft auf, von elektrischen und magnetischen Feldern passiert zu werden.

Verschiedene Maßnahmen gelten als bekannt, um Kunststoffbauteilen schirmende Eigenschaften zu verleihen. Einerseits sind sogenannte intrinsisch leitfähige Polymere, wie z.B. Polyacetylen, Polypyrrol, Polyanilin oder Polythiophen, verfügbar. Konjugierte Doppelbildungen ermöglichen hier eine freie Beweglichkeit von Ladungsträgern im dotierten Zustand.

Des Weiteren können Kunststoffe durch Zugabe geeigneter Additive mit einer gewissen Leitfähigkeit ausgestattet werden. Voraussetzung für eine hinreichende Abschirmung ist, dass diese Additive in ausreichender Menge dem Polymer zugesetzt und entsprechend verarbeitet werden, um ein leitfähiges Netzwerk auszubilden, denn die elektrische Leitung erfolgt über sich berührende Füllstoffpartikel, die durchgehende Strompfade bilden. Gebräuchliche Füllstoffe sind beispielsweise Ruß und andere Kohlenstoffmodifikationen, Metallfasern, metallisierte Glas- oder Kunststofffasern, metallisierte Glaskugeln sowie Aluminiumplättchen oder -flakes.

Häufig wird auch ein übliches, nicht leitendes Gehäuse nachträglich mit einer leitfähigen Beschichtung versehen. Leitfähige Beschichtungen werden beispielsweise durch physikalische Gasphasenabscheidung, Flamm-, Plasma- oder Lichtbogenspritzen chemisch bzw. galvanisch aufgebracht.

Darüber hinaus gibt es Ansätze, dicke thermoplastische Folien tiefzuziehen und nachträglich ein Drahtgitter oder ein Metallvlies einzulegen oder die Kombination beider Verfahrensschritte sowie dünne Gitter zu hinterschäumen.

Die JP 61234599 A offenbart ein elektromagnetisch abschirmendes Gehäuse, welches eine eingebettete Schicht eines gitterartigen leitenden Materials aufweist. In einem aus Kunstharz ausgebildeten Gehäuse ist hierbei eine schirmende Schicht des gitterartigen, leitenden Materials ausgebildet, wobei das Gehäuse eine erste und eine zweite Schicht aufweist. Nach Ausbilden der ersten Schicht wird die schirmende Schicht auf dieser angeordnet. Anschließend wird die zweite Schicht ausgebildet und auf der schirmenden Schicht angeordnet. Das Dokument D1 = US-A-2011/ 059293 offenbart ein Verfahren zum Herstellen eines Schichtverbunds zur Abschirmung von elektromagnetischer Strahlung, mit einer ersten und zweiten Kunststoffschicht. Zwischen diesen Schichten befindet sich eine Einlage zur Abschirmung elektromagnetischer Strahlung. Der Schichtverbund ist umformbar.

### Offenbarung der Erfindung

Die vorliegende Erfindung schafft ein Verfahren zum Herstellen eines Schichtverbunds zur Abschirmung von elektromagnetischer Strahlung mit den Merkmalen des Patentanspruchs 1.

Gemäß einem weiteren Aspekt schafft die vorliegende Erfindung einen Schichtverbund zur Abschirmung von elektromagnetischer Strahlung mit den Merkmalen des Patentanspruchs 5.

Eine Idee der vorliegenden Erfindung ist es, eine Verfahrenskombination bei der Herstellung des Schichtverbunds zu erreichen. Durch das erfindungsgemäße Verfahren zum Herstellen des Schichtverbunds ist der Schichtverbund als Ganzes umformbar und somit können die Schichten des Schichtverbunds in einem einzigen Verfahrensschritt umgeformt werden.

Vorteilhafte Ausführungsformen und Weiterbildungen ergeben sich aus den Unteransprüchen sowie aus der Beschreibung unter Bezugnahme auf die Figuren.

Vorzugsweise ist vorgesehen, dass der Schichtverbund von der Erwärmungseinrichtung in die Umformeinrichtung mittels einer Transfereinrichtung transferiert wird. Somit kann der erwärmte Schichtverbund in der Umformeinrichtung in vorteilhafter Weise umgeformt werden.

Vorzugsweise ist ferner vorgesehen, dass der Schichtverbund mittels einer Spritzgießeinrichtung mit einem Thermoplastwerkstoff umspritzt wird. Durch das Umspritzen des Schichtverbunds kann ein nach außen hin vollständig isolierendes Bauteil hergestellt werden.

Gemäß einer weiteren bevorzugten Ausgestaltung ist vorgesehen, dass der Schichtverbund mittels der Umformeinrichtung dreidimensional umgeformt wird. Dadurch ist der Schichtverbund an eine gewünschte Form eines herzustellenden Bauteils anpassbar.

Gemäß einem weiteren bevorzugten Ausführungsbeispiel ist vorgesehen, dass bei einem Schließen der Spritzgießeinrichtung das Umformen des Schichtverbunds entsprechend einer Werkzeugkontur eines Spritzgießwerkzeugs der Spritzgießeinrichtung durchgeführt wird. Durch Vorsehen der Umformeinrichtung in der Spritzgießeinrichtung kann ein abschirmendes Kunststoffbauteil, wie beispielsweise ein Gehäuse, in einem Schuss mittels Spritzgießen hergestellt werden.

Vorzugsweise ist ferner vorgesehen, dass die erste und zweite Kunststoffschicht jeweils aus einem Organoblech oder einer Kunststofffolie ausgebildet ist, wobei das Organoblech ein in einer thermoplastischen Kunststoffmatrix eingebettetes plattenförmiges Halbzeug aus Endlosfasern aufweist, welche aus Glasfasern, Kohlenstofffasern, Aramidfasern oder Naturfasern ausgebildet sind. Durch die Kombination von plattenförmigen Halbzeugen aus Endlosfasern und thermoplastischer Matrix mit einer abschirmenden Einlage lassen sich Bauteile herstellen, die gegenüber solchen, die lediglich aus einer Kunststofffolie bestehen, deutlich bessere mechanische Eigenschaften aufweisen.

Gemäß einem weiteren bevorzugten Ausführungsbeispiel ist vorgesehen, dass das Organoblech eine Dicke von 0,5 mm bis 2 mm und die Kunststofffolie eine Dicke von 0,1 mm bis 1 mm aufweist. Die Dicke des jeweils zu verwendenden Organoblechs oder der Kunststofffolie ist somit an jeweilige Erfordernisse anpassbar.

Vorzugsweise ist ferner vorgesehen, dass die Einlage aus einem Metallgitter, einem Metallgewebe, einem Metallvlies, einer Metallfolie, aufgestreuten Metallfasern oder aufgestreuten metallisierten Glas- oder Kunststofffasern ausgebildet ist. Dadurch kann die schirmende Einlage ein durchgängiges leitfähiges Netzwerk ausbilden.

Gemäß einer weiteren bevorzugten Ausgestaltung ist vorgesehen, dass die Einlage an eine Art und/oder eine Größe abzuschirmender elektromagnetischer Felder anpassbar ist. Der Schichtverbund ist somit flexibel einsetzbar und an jeweilige Erfordernisse einer Einbaulage bzw. benachbart verbauter Komponenten anpassbar.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung eines Schichtverbunds gemäß einer Ausführungsform der Erfindung; und
- Fig. 2: ein Ablaufdiagramm eines Verfahrens zum Herstellen des Schichtverbunds gemäß einer Ausführungsform der Erfindung.

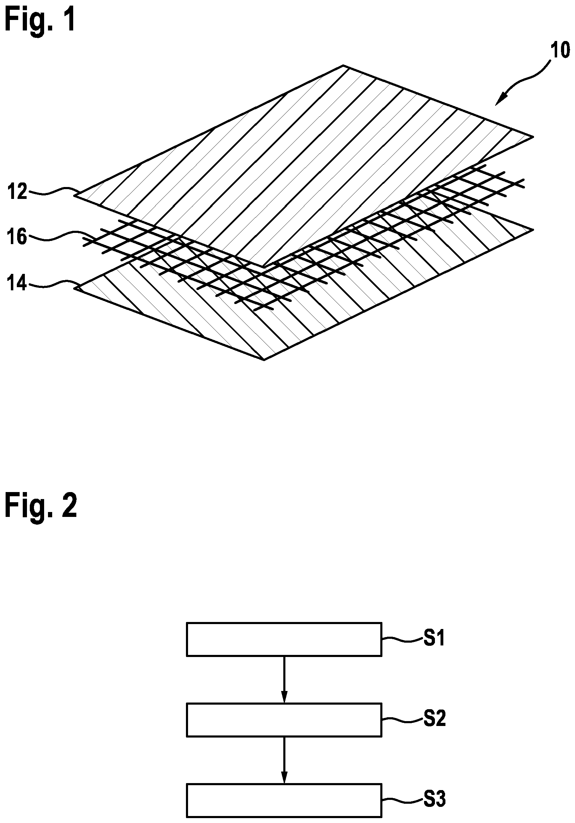

Fig. 1 zeigt eine schematische Darstellung eines Schichtverbunds gemäß einer Ausführungsform der Erfindung.

Ein Schichtverbund 10 weist eine erste Kunststoffschicht 12, eine zweite Kunststoffschicht 14 und eine Einlage 16 auf. Die Einlage 16 ist zwischen der ersten Kunststoffschicht 12 und der zweiten Kunststoffschicht 14 angeordnet. Die Einlage 16 ist dazu ausgebildet, elektromagnetische Strahlung abzuschirmen.

Die erste und zweite Kunststoffschicht 12, 14 sind jeweils aus einem Organoblech oder einer Kunststofffolie ausgebildet. Das Organoblech weist ein in einer thermoplastischen Kunststoffmatrix eingebettetes plattenförmiges Halbzeug aus Endlosfasern auf, wobei die Endlosfasern aus Glasfasern, Kohlenstofffasern, Aramidfasern oder Naturfasern ausgebildet sind. Das Organoblech weist vorzugsweise eine Dicke von 0,5 mm bis 2 mm und die Kunststofffolie eine Dicke von 0,1 mm bis 1 mm auf. Die Einlage 16 ist vorzugsweise aus einem Metallgitter, einem Metallgewebe, einem Metallvlies, einer Metallfolie, aufgestreuten Metallfasern oder aufgestreuten metallisierten Glas- oder Kunststofffasern ausgebildet. Die Einlage 16 ist hierbei an eine Art und/oder eine Größe abzuschirmender elektromagnetischer Felder anpassbar.

Fig. 2 zeigt ein Ablaufdiagramm eines Verfahrens zum Herstellen des Schichtverbunds gemäß einer Ausführungsform der Erfindung.

Das Verfahren zum Herstellen des Schichtverbunds 10 zur Abschirmung von elektromagnetischer Strahlung umfasst ein Anordnen S1 einer ersten Kunststoffschicht 12, einer zweiten Kunststoffschicht 14 und einer zwischen der ersten und der zweiten Kunststoffschicht angeordneten Einlage 16, wobei die Einlage 16 zur Abschirmung elektromagnetischer Strahlung ausgebildet ist. Das Verfahren umfasst des Weiteren ein Erwärmen S2 des Schichtverbunds auf eine Umformtemperatur mittels einer (in den Figuren nicht gezeigten) Erwärmungseinrichtung und ein Umformen S3 des Schichtverbunds in eine vorgegebene Form mittels einer (in den Figuren nicht gezeigten) Umformeinrichtung.

Der Schichtverbund wird von der Erwärmungseinrichtung in die Umformeinrichtung vorzugsweise mittels einer (in den Figuren nicht gezeigten) Transfereinrichtung transferiert. Die Umformeinrichtung ist vorzugsweise in einer (in den Figuren nicht gezeigten) Spritzgießeinrichtung angeordnet, mittels welcher in einem optionalen weiteren Verfahrensschritt der Schichtverbund 10 mittels der Spritzgießeinrichtung mit einem Thermoplastwerkstoff umspritzt werden kann. Alternativ können die Umformeinrichtung und die Spritzgießeinrichtung auch separat ausgebildet sein.

Bei einem Schließen der Spritzgießeinrichtung erfolgt vorzugsweise das Umformen des Schichtverbunds 10 entsprechend einer Werkzeugkontur eines (in den Figuren nicht gezeigten) Spritzgießwerkzeugs der Spritzgießeinrichtung. Der Schichtverbund wird hierbei vorzugsweise mittels der Umformeinrichtung dreidimensional umgeformt.

Optional kann mittels der Spritzgießeinrichtung ein Verbindungselement bzw. Verbindungselemente an den Schichtverbund 10 angespritzt werden, wobei das Verbindungselement eine zusätzliche Funktion aufweisen kann.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann der Schichtverbund 10 derart ausgebildet sein, dass die erste Kunststoffschicht aus dem Organoblech und die zweite Kunststoffschicht aus der Kunststofffolie ausgebildet ist und umgekehrt.

## Patentansprüche

1. Verfahren zum Herstellen eines Schichtverbunds (10) zur Abschirmung von elektromagnetischer Strahlung, mit den Schritten:
Anordnen (S1) einer ersten Kunststoffschicht (12), einer zweiten Kunststoffschicht (14) und einer zwischen der ersten und der zweiten Kunststoffschicht angeordneten Einlage (16), wobei die Einlage (16) zur Abschirmung elektromagnetischer Strahlung ausgebildet ist;
Erwärmen (S2) des Schichtverbunds (10) auf eine Umformtemperatur mittels einer Erwärmungseinrichtung; und
Umformen (S3) des Schichtverbunds (10) in eine vorgegebene Form mittels einer Umformeinrichtung,
**dadurch gekennzeichnet, dass** der Schichtverbund (10) mittels einer Spritzgiesseinrichtung mit einem Thermoplastwerkstoff umspritzt wird.

2. Verfahren nach Anspruch 1, **dadurch gekennzeichnet, dass** der Schichtverbund (10) von der Erwärmungseinrichtung in die Umformeinrichtung mittels einer Transfereinrichtung transferiert wird.

3. Verfahren nach einem der vorhergehenden Ansprüche, **dadurch gekennzeichnet, dass** der Schichtverbund (10) mittels der Umformeinrichtung dreidimensional umgeformt wird.

4. Verfahren nach einem der vorhergehenden Ansprüche, **dadurch gekennzeichnet, dass** bei einem Schliessen der Spritzgiesseinrichtung das Umformen des Schichtverbunds (10) entsprechend einer Werkzeugkontur eines Spritzgiesswerkzeugs der Spritzgiesseinrichtung durchgeführt wird.

5. Schichtverbund zur Abschirmung von elektromagnetischer Strahlung, mit:
einer ersten Kunststoffschicht (12), einer zweiten Kunststoffschicht (14) und einer zwischen der ersten und der zweiten Kunststoffschicht (12, 14) angeordneten Einlage (16), wobei die Einlage (16) zur Abschirmung elektromagnetischer Strahlung ausgebildet ist, und wobei der Schichtverbund (10) dazu ausgebildet ist, mittels einer Erwärmungseinrichtung auf eine Umformtemperatur erwärmt zu werden und mittels einer Umformeinrichtung in eine vorgegebene Form umgeformt zu werden,
**dadurch gekennzeichnet, dass** der Schichtverbund (10) mittels einer Spritzgiesseinrichtung mit einem Thermoplastwerkstoff umspritzt ist.

6. Schichtverbund nach Anspruch 5, **dadurch gekennzeichnet, dass** die erste und zweite Kunststoffschicht (12, 14) jeweils aus einem Organoblech oder einer Kunststofffolie ausgebildet sind, wobei das Organoblech ein in einer thermoplastischen Kunststoffmatrix eingebettetes plattenförmiges Halbzeug aus Endlosfasern aufweist, welche aus Glasfasern, Kohlenstofffasern, Aramidfasern oder Naturfasern ausgebildet sind.

7. Schichtverbund nach Anspruch 6, **dadurch gekennzeichnet, dass** das Organoblech eine Dicke von 0,5mm bis 2mm und die Kunststofffolie eine Dicke von 0,1mm bis 1mm aufweist.

8. Schichtverbund nach einem der Ansprüche 5 bis 7, **dadurch gekennzeichnet, dass** die Einlage (16) aus einem Metallgitter, einem Metallgewebe, einem Metallvlies, einer Metallfolie, aufgestreuten Metallfasern oder aufgestreuten metallisierten Glas- oder Kunststofffasern ausgebildet ist.

9. Schichtverbund nach einem der Ansprüche 5 bis 8, **dadurch gekennzeichnet, dass** die Einlage (16) an eine Art und/oder eine Größe abzuschirmender elektromagnetischer Felder anpassbar ist.

## Claims

1. Method for producing a laminate (10) for shielding electromagnetic radiation, comprising the steps of:
arranging (S1) a first layer of plastic (12), a second layer of plastic (14) and an insert (16) arranged between the first and second layers of plastic, wherein the insert (16) is designed for shielding electromagnetic radiation;
heating (S2) the laminate (10) to a moulding temperature by means of a heating device; and
moulding (S3) the laminate (10) into a predetermined shape by means of a moulding device,
**characterized in that** the laminate (10) is encapsulated with a thermoplastic material by means of an injection-moulding device.

2. Method according to Claim 1, **characterized in that** the laminate (10) is transferred from the heating device into the moulding device by means of a transfer device.

3. Method according to one of the preceding claims, **characterized in that** the laminate (10) is moulded three-dimensionally by means of the moulding device.

4. Method according to one of the preceding claims, **characterized in that**, during a closing of the injection-moulding device, the moulding of the laminate (10) is carried out in a way corresponding to a contour of an injection mould of the injection-moulding device.

5. Laminate for shielding electromagnetic radiation, comprising:
a first layer of plastic (12), a second layer of plastic (14) and an insert (16) arranged between the first and second layers of plastic (12, 14), wherein the insert (16) is designed for shielding electromagnetic radiation, and wherein the laminate (10) is designed for being heated to a moulding temperature by means of a heating device and being moulded into a predetermined shape by means of a moulding device,
**characterized in that** the laminate (10) is encapsulated with a thermoplastic material by means of an injection-moulding device.

6. Laminate according to Claim 5, **characterized in that** the first and second layers of plastic (12, 14) are formed in each case by an organometallic sheet or a film of plastic, the organometallic sheet comprising a semifinished sheet of continuous fibres, which are formed by glass fibres, carbon fibres, aramid fibres or natural fibres, embedded in a thermoplastic matrix.

7. Laminate according to Claim 6, **characterized in that** the organometallic sheet has a thickness of 0.5 mm to 2 mm and the film of plastic has a thickness of 0.1 mm to 1 mm.

8. Laminate according to one of Claims 5 to 7, **characterized in that** the insert (16) is formed by a metal mesh, a woven metal fabric, a nonwoven metal fabric, a metal foil, scattered metal fibres or scattered metallized glass or synthetic fibres.

9. Laminate according to one of Claims 5 to 8, **characterized in that** the insert (16) is adaptable to a type and/or size of electromagnetic fields to be shielded.

## Revendications

1. Procédé de fabrication d'un composite stratifié (10) servant au blindage contre le rayonnement électromagnétique, comprenant les étapes suivantes:
disposer (S1) une première couche de matière plastique (12), une deuxième couche de matière plastique (14) et une couche interne (16) disposée entre la première et la deuxième couches de matière plastique, dans lequel la couche interne (16) est formée pour le blindage contre le rayonnement électromagnétique;
chauffer (S2) le composite stratifié (10) à une température de déformation au moyen d'un dispositif de chauffage; et
déformer (S3) le composite stratifié (10) à une forme prédéterminée au moyen d'un dispositif de déformation, **caractérisé en ce que** l'on enrobe le composite stratifié (10) avec un matériau thermoplastique au moyen d'un dispositif de moulage par injection.

2. Procédé selon la revendication 1, **caractérisé en ce que** l'on transfère le composite stratifié (10) du dispositif de chauffage au dispositif de déformation au moyen d'un dispositif de transfert.

3. Procédé selon l'une quelconque des revendications précédentes, **caractérisé en ce que** l'on déforme le composite stratifié en trois dimensions au moyen du dispositif de déformation.

4. Procédé selon l'une quelconque des revendications précédentes, **caractérisé en ce que** l'on effectue la déformation du composite stratifié (10) selon un contour d'outil d'un outil de moulage par injection du dispositif de moulage par injection lors d'une fermeture du dispositif de moulage par injection.

5. Composite stratifié servant au blindage contre le rayonnement électromagnétique, comprenant une première couche de matière plastique (12), une deuxième couche de matière plastique (14) et une couche interne (16) disposée entre la première et la deuxième couches de matière plastique (12, 14), dans lequel la couche interne (16) est formée pour le blindage contre le rayonnement électromagnétique, et dans lequel le composite stratifié (10) est conçu pour être chauffé à une température de déformation au moyen d'un dispositif de chauffage et pour être déformé à une forme prédéterminée au moyen d'un dispositif de déformation, **caractérisé en ce que** le composite stratifié (10) est enrobé avec un matériau thermoplastique au moyen d'un dispositif de moulage par injection.

6. Composite stratifié selon la revendication 5, **caractérisé en ce que** la première et la deuxième couches de matière plastique (12, 14) sont respectivement formées d'une tôle organique ou d'une feuille de matière plastique, dans lequel la tôle organique présente un demi-produit en fibres sans fin en forme de plaque noyé dans une matrice en matière plastique thermoplastique, qui sont formées par des fibres de verre, des fibres de carbone, des fibres d'aramide ou des fibres naturelles.

7. Composite stratifié selon la revendication 6, **caractérisé en ce que** la tôle organique présente une épaisseur de 0,5 mm à 2 mm et la feuille de matière plastique présente une épaisseur de 0,1 mm à 1 mm.

8. Composite stratifié selon l'une quelconque des revendications 5 à 7, **caractérisé en ce que** la couche interne (16) est formée par une grille métallique, un tissu métallique, un non tissé métallique, une feuille métallique, des fibres métalliques répandues ou des fibres de verre ou des fibres de matière plastique métallisées répandues.

9. Composite stratifié selon l'une quelconque des revendications 5 à 8, **caractérisé en ce que** la couche interne (16) peut être adaptée à une nature et/ou à une grandeur de champs électromagnétiques à blinder.
